# EUROPÄISCHE PATENTANMELDUNG

(11) **EP 0 588 004 A1**
(43) Veröffentlichungstag der Anmeldung: **23.03.1994**
(21) Anmeldenummer: 93110792.4
(22) Anmeldetag: 06.07.1993
(51) Int. Cl.: H01M 10/50, H01M 2/10

(54) **Elektrische Speicherbatterie, insbesondere für einen Fahrzeug-Antrieb**

(30) Priorität: 12.09.1992 DE 4230583
(71) Anmelder: Bayerische Motoren Werke Aktiengesellschaft, 80788 München (DE)
(72) Erfinder: Bednarek, Henryk, D-86899 Landsberg (DE)

(57) **Zusammenfassung**

Eine Hochtemperatur-Speicherbatterie, die auf einem Temperaturniveau von beispielsweise 300°C gehalten werden muß, ist nicht nur mit einer Isolationsschicht, sondern auch mit einem Latentwärmespeicher umhüllt. Gibt die Batterie Überschußwärme ab, so wird dieser Latentwärmespeicher beladen, ist es erforderlich, die Batterie zu beheizen, so wird die benötigte Wärmemenge aus dem Latentwärmespeicher abgezogen. Zusätzlich kann im oder am Latentwärmespeicher ein Wärmetauscher vorgesehen sein. Angegeben ist eine besonders vorteilhafte konstruktive Ausführungsform.

## Beschreibung

Die Erfindung betrifft eine elektrische Speicherbatterie, insbesondere für einen Fahrzeug-Antrieb, mit einer das Batteriegehäuse umgebenden Wärmeisolationsschicht. Hochleistungs-Speicherbatterien, insbesondere für Elektrofahrzeuge sind Hochtemperatur-Batterien, die beispielsweise im Falle der Na/S-Batterie der Firma ABB im Temperaturbereich von 280°C - 320°C arbeiten. Benötigt wird bei diesen Batterien eine hocheffektive Wärmeisolation, um die erforderliche Temperatur mit möglichst geringen Wärmeverlusten zu halten. Andererseits benötigen diese Batterien komplexe Kühlsysteme, um bei starker Belastung dieser Batterie die durch den ohmschen Widerstand der Batteriezellen erzeugte Verlustwärme abzuführen. Steht hingegen eine derartige Batterie über längere Zeit unbenutzt, so muß ein Teil der in der Batterie gespeicherten Energie darauf verwendet werden, die Batterie elektrisch nachzuheizen, um die Isolationswärmeverluste zu kompensieren. Diese Heiz- und Kühlsysteme, die erforderlich sind, um die Betriebstemperatur der Batterie im vorgeschriebenen Bereich zu halten, verschlechtern den Gesamtwirkungsgrad einer derartigen elektrischen Speicherbatterie, da im Belastungsfall Wärme abgeführt werden muß, die in der Standphase über eine verlustreiche Wirkungsgradkette wieder zuzuführen ist.

Daher ist es Aufgabe der Erfindung, Maßnahmen zur Steigerung des Gesamtwirkungsgrades aufzuzeigen. Zur Lösung dieser Aufgabe ist Vorgesehen, daß die Wärmeisolationsschicht zumindest teilweise als Latentwärmespeicher ausgebildet ist. Vorteilhafte Aus- und Weiterbildungen sind Inhalt der Unteransprüche.

Erfindungsgemäß wird die Überschußwärme, die während eines Batterieladevorganges oder bei Belastung der Batterie anfällt, in einem in der Batterie integrierten Latentwärmespeicher gespeichert. Durch Wärmeabgabe aus diesem Latentwärmespeicher werden die Isolationswärmeverluste, die während der Batteriestandphase entstehen, gedeckt. Bevorzugt liegt der Latentwärmespeicher dabei in einem hocheffektiv isolierten Raum, so daß keine besonderen Anforderungen hinsichtlich Belade- und Entladedynamik vorliegen. Da darüber hinaus in Form der Begrenzungsflächen der eigentlichen Speicherbatterie relativ große Wärmeübertragungsflächen zur Verfügung stehen, läßt sich ein Latentwärmespeicher für diesen Anwendungsfall relativ einfach aufbauen.

Latentwärmespeicher sind an sich bekannt, so beispielsweise aus der WO 89/09375. Analog diesem bekannten Latentwärmespeicher kann auch im vorliegenden Fall eines eine elektrische Speicherbatterie umgebenden Latentwärmespeichers ein geeignetes Speichermedium, das in den sich einstellenden Temperaturspannen einen Phasenwechsel erfährt, zum Einsatz kommen. Dieses Speichermedium wird bevorzugt in einen Raum zwischen dem eigentlichen Batteriegehäuse, das die einzelnen Batteriezellen aufnimmt, sowie einem das Batteriegehäuse umgebenden Speichergehäuse eingefüllt. Dabei sollte das zur Verfügung stehende theoretische Speichervolumen nur teilweise mit Speichermedium befüllt werden, da neben der Volumenänderung beim Phasenübergang auch ein Pufferraum von beispielsweise 2 % des theoretisch zur Verfügung stehenden Gesamtvolumens vorgesehen werden sollte.

Es wird vorgeschlagen, den mit dem Speichermedium befüllten Raum zwischen Batteriegehäuse und Speichergehäuse nach dem Konstruktionsprinzip eines Plattenwärmetauschers mit eingelöteten Rippen bzw. Lamellen aufzubauen. Dabei sollten diese Rippen bzw. Lamellen so ausgerichtet werden, daß sich geschlossene Ringräume bzw. Teilräume bilden, die sich über mehrere aneinander angrenzende Flächen des Batteriegehäuses erstrecken. Besitzt das Batteriegehäuse beispielsweise eine übliche quaderförmige Gestalt, so können die meisten der durch die Lamellen bzw. Rippen gebildeten Teilräume diesen Querschnitt des Batteriegehäuses bzw. das Batteriegehäuse umhüllen. An den beiden einander gegenüberliegenden Stirnflächen des quaderförmigen Batteriegehäuses hingegen können einfache sich vertikal erstreckende Teilräume vorgesehen sein. Mit der angegebenen Orientierung werden die Teilräume bzw. werden deren Lamellen mit den geringstmöglichen Druckeinwirkungen beaufschlagt.

Wie bereits erwähnt, empfiehlt es sich nicht nur, zur Verringerung der Wärmeverluste das Speichergehäuse mit einer weiteren Isolationsschicht zu umgeben, sondern es kann darüber hinaus auch im oder am Speichergehäuse ein Wärmetauscher für einen hindurchzuschickenden Wärmeträger vorgesehen sein. Dieser Wärmeträger kann dann beispielsweise dazu verwendet werden, den Innenraum eines Fahrzeuges, das mit einer erfindungsgemäßen Speicherbatterie ausgestattet ist, mit der im Latentwärmespeicher gespeicherten Überschußwärme zu beheizen. Selbstverständlich kann dieser Wärmetauscher auch dazu dienen, bei bereits beladenem Latentwärmespeicher weiterhin anfallende Überschußwärme abzuführen. Bevorzugt sollte jedoch das ganze System in seinen Dimensionen derart ausgelegt werden, daß die eingangs angesprochenen separaten Heiz- und Kühleinrichtungen einer Hochtemperatur-Speicherbatterie vollständig entfallen können. Deren Funktion wird nämlich durch den erfindungsgemäß vorgesehenen Latentwärmespeicher übernommen. Damit ist es möglich, die Batterie vollkommen zu hermetisieren und damit die Wärmeverluste so weit als möglich zu reduzieren. Daß damit wesentliche Steigerungen des Gesamtwirkungsgrades des Batteriesystemes möglich sind, liegt auf der Hand. Vorteilhafterweise kann der Latentwärmespeicher zusätzlich als tragendes steifes Innengehäuse ausgeführt werden, und somit die mechanische Standfestigkeit der Speicherbatterie beispielsweise bei einem Fahrzeugcrash erhöhen.

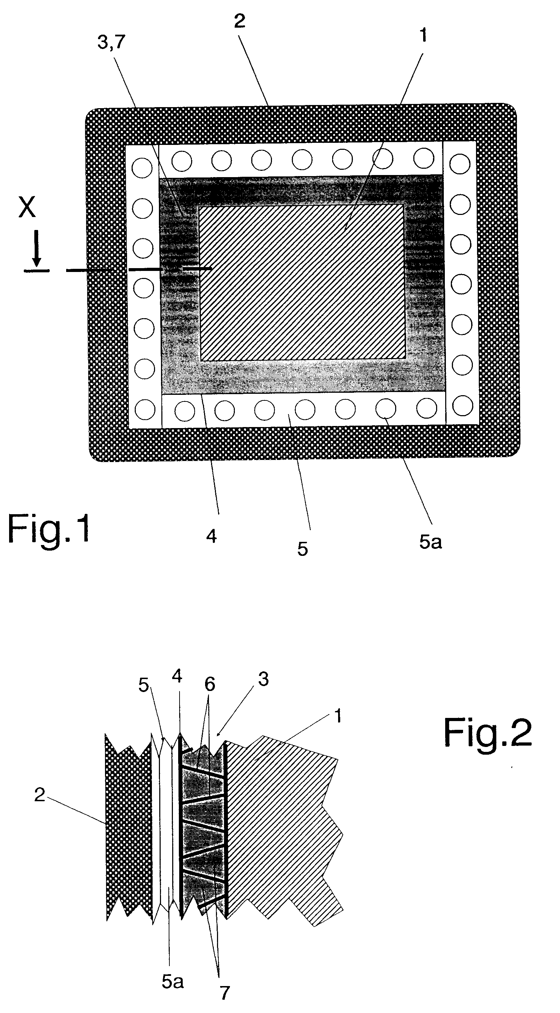

Ein bevorzugtes Ausführungsbeispiel der Erfindung ist in zwei Prinzipskizzen (Fig. 1 zeigt einen Querschnitt, Fig. 2 den Teilschnitt X aus Fig. 1) dargestellt. Mit der Bezugsziffer 1 ist das Batteriegehäuse einer elektrischen Hochtemperatur-Speicherbatterie bezeichnet. Innerhalb dieses Batteriegehäuses sind die einzelnen nicht gezeigten Batteriezellen angeordnet. Da diese Hochtemperatur-Speicherbatterie nur bei Betriebstemperaturen von 280°C - 320°C wirkungsvoll arbeiten kann und daher die Wärmeverluste durch Wärmeabstrahlung über das Batteriegehäuse 1 geringzuhalten sind, ist das Batteriegehäuse allseitig u. a. von einer Wärmeisolationsschicht 2 umgeben.

Da es andererseits während des Batterieladevorganges sowie bei Entnahme hoher Entladeströme erforderlich ist, die Speicherbatterie zu kühlen, ist zwischen der Wärmeisolationsschicht 2 sowie dem Batteriegehäuse 1 ein Latentwärmespeicher 3 vorgesehen. Dieser Latentwärmespeicher 3 besteht im wesentlichen aus einem geeigneten Speichermedium, das in ein Speichergehäuse 4 eingefüllt ist, das das Batteriegehäuse 1 unter Bildung eines Zwischenraumes umgibt. In den Zeiten, in denen die Batterie Abfallwärme bzw. Überschußwärme freisetzt, wird diese Wärme vom Latentwärmespeicher 3 aufgenommen und in diesem auf bekannte Weise, nämlich durch Phasenwechsel des Speichermateriales gespeichert. Ist zu anderen Zeiten hingegen eine Wärmezufuhr zur Speicherbatterie bzw. durch das Batteriegehäuse 1 hindurch erforderlich, so ist der Latentwärmespeicher 3 in der Lage, diese erforderliche Wärmemenge durch abermaligen Phasenwechsel des Speichermaterials wieder freizusetzen. Mit Auswahl eines geeigneten Speichermaterials sowie geeigneter Dimensionierung des Latentwärmespeichers 3 ist bei allen denkbaren Betriebszuständen die Wärmebilanz der elektrischen Speicherbatterie ausgeglichen.

Zusätzlich ist jedoch noch in einer bevorzugten Ausführungsform ein in seiner Gesamtheit mit 5 bezeichneter Wärmetauscher zwischen dem Speichergehäuse 4 sowie der Wärmeisolationsschicht 2 vorgesehen. Über diesen Wärmetauscher 5 kann zum einen in den Fällen, in denen der Latentwärmespeicher 3 nicht in der Lage ist, die gesamte Überschußwärme der elektrischen Speicherbatterie aufzunehmen, überschüssige Abfallwärme abgeführt werden. Insbesondere jedoch kann über diesen Wärmetauscher 5, der aus einer Vielzahl von Rohren 5a besteht, ein Wärmeträger erwärmt werden, der aus der elektrischen Speicherbatterie herausführbar ist und beispielsweise der Beheizung des Fahrzeuges, in dem diese Speicherbatterie eingebaut ist, dienen kann.

Wie Fig. 2 zeigt, sind im Raum zwischen dem Batteriegehäuse 1 sowie dem Speichergehäuse 4 Rippen 6 vorgesehen, die durch mäanderförmig zwischen dem Batteriegehäuse 1 sowie dem Speichergehäuse 4 eingelötete Lamellen gebildet werden. Diese Rippen bilden eine Vielzahl von Teilräumen 7, von denen einer in Fig. 1 zu sehen ist und von denen zumindest die meisten in sich geschlossene Ringräume bilden. Lediglich die nicht gezeigten, durch die Verrippung entstehenden Teilräume an den beiden Stirnseiten des Batteriegehäuses 1 erstrecken sich lediglich längs der Stirnseiten bevorzugt in vertikaler Richtung. Befüllt sind die einzelnen Teilräume 7 mit dem in den sich einstellenden Temperaturspannen einen Phasenwechsel durchführenden Speichermedium. Die gezeigte Orientierung der Teilräume 7 ist dabei einem optimalen Phasenwechsel förderlich. Jedoch kann dies sowie weitere konstruktive Details durchaus anderweitig gestaltet sein, ohne den Inhalt der Patentansprüche zu verlassen.

## Patentansprüche

1. Elektrische Speicherbatterie, insbesondere für einen Fahrzeug-Antrieb, mit einer das Batteriegehäuse (1) umgebenden Wärmeisolationsschicht (2),
dadurch gekennzeichnet, daß die Wärmeisolationsschicht (2) zumindest teilweise als Latentwärmespeicher (3) ausgebildet ist.

2. Speicherbatterie nach Anspruch 1,
dadurch gekennzeichnet, daß der Latentwärmespeicher (3) aus einem geeigneten, in den sich einstellenden Temperaturspannen einen Phasenwechsel durchführenden Speichermedium besteht, das sich in einem Raum zwischen dem Batteriegehäuse (1) sowie einem dieses umgebenden Speichergehäuse (4) befindet.

3. Speicherbatterie nach Anspruch 2,
dadurch gekennzeichnet, daß der Raum zwischen Batteriegehäuse (1) und Speichergehäuse (4) verrippt ist.

4. Speicherbatterie nach Anspruch 3,
dadurch gekennzeichnet, daß die Rippen (6) sich über mehrere aneinander angrenzende Flächen des Batteriegehäuses (1) erstreckende Teilräume (7) bilden.

5. Speicherbatterie nach Anspruch 4,
dadurch gekennzeichnet, daß zumindest einige der Teilräume (7) in sich geschlossene Ringräume bilden.

6. Speicherbatterie nach einem der Ansprüche 3 bis 5,
dadurch gekennzeichnet, daß die Rippen (6) durch mäanderförmig zwischen Batteriegehäuse (1) und Speichergehäuse (4) eingelötete Lamellen gebildet werden.

7. Speicherbatterie nach einem der vorangegangenen Ansprüche,
dadurch gekennzeichnet, daß das Speichergehäuse (4) von einer weiteren Isolationsschicht (2) umgeben ist.

8. Speicherbatterie nach einem der vorangegangenen Ansprüche,
dadurch gekennzeichnet, daß im oder am Speichergehäuse (4) ein Wärmetauscher (5) für ein aus der Batterie herausführbares Wärmeträgermittel vorgesehen ist.
